Europäisches Patentamt

European Patent Office

Office européen des brevets

(19)

(11) Numéro de publication: **0 037 321**
**B1**

(12) # FASCICULE DE BREVET EUROPEEN

(45) Date de publication du fascicule du brevet:
**14.03.84**

(51) Int. Cl.³: **B 01 J 20/06,** B 01 J 20/10,
C 22 B 60/02, B 01 J 20/28,
G 21 F 9/12

(21) Numéro de dépôt: **81400456.0**

(22) Date de dépôt: **23.03.81**

(54) **Procédé de préparation de matériaux adsorbants destinés à l'analyse ou au traitement des liquides et les matériaux ainsi obtenus.**

(30) Priorité: **02.04.80 FR 8007460**

(43) Date de publication de la demande:
**07.10.81 Bulletin 81/40**

(45) Mention de la délivrance du brevet:
**14.03.84 Bulletin 84/11**

(84) Etats contractants désignés:
**BE CH DE GB IT LI NL SE**

(56) Documents cités:
**DE - C - 745 752**
**FR - A - 941 035**
**GB - A - 289 890**
**GB - A - 392 954**
**GB - A - 521 214**
**GB - A - 1 232 062**
**US - A - 2 057 414**
**US - A - 2 914 487**
**US - A - 3 775 345**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Caries, Jean-Claude, "La Retirado",**
**F-04100 Manosque (FR)**

(74) Mandataire: **Mongrédien, André et al, c/o**
**BREVATOME 25, rue de Ponthieu, F-75008 Paris (FR)**

BUNDESDRUCKEREI BERLIN

## Procédé de préparation de matériaux adsorbants destinés à l'analyse ou au traitement des liquides et les matériaux ainsi obtenus

La présente invention a pour objet un procédé de préparation de matériaux adsorbants utilisables pour le traitement ou l'analyse de liquides.

De façon plus précise, elle concerne des matériaux adsorbants comprenant un support minéral dans lequel est incluse une substance adsorbante.

Depuis quelques années, l'utilisation de matériaux solides doués de propriétés adsorbantes, s'est développée de plus en plus dans des domaines aussi divers que ceux de l'analyse et du contrôle de l'environnement, du traitement des déchets liquides ou solides et de la récupération de composés nécessaires à l'industrie par suite de leur coût et de leur pénurie; de nombreuses substances adsorbantes minérales ou organiques, douées de propriétés d'échange ionique et/ou d'adsorption peuvent êre utilisées dans ce but et choisies en fonction de la nature et de la forme physicochimique des éléments à fixer.

Jusqu'à présent, de tels matériaux solides doués de propriétés adsorbantes ont été préparés en imprégnant un support inerte organique, par exemple en polyéthylène ou en polyuréthane, ou un support inerte minéral, par exemple en silice ou en alumine au moyen de substances adsorbantes. Cependant, en raison de ce mode de préparation, le support constitue dans ce cas, une rande part du poids total du matériau adsorbant obtenu.

Par ailleurs, la réalisation de ces matériaux adsorbants pose certains problèmes lorsqu'on veut les obtenir sous la forme d'une phase solide de granulométrie choisie conservant toutes les propriétés de la substance adsorbante et présentant de plus des caractéristiques mécaniques satisfaisantes et une bonne résistance aux agents chimiques.

On a aussi envisagé de préparer de tels matériaux adsorbants par traitement thermique d'une solution aqueuse contenant une substance adsorbante en poudre et un ou plusieurs composés minéraux qui constitueront le support ou le liant de la substance adsorbante.

Les composés minéraux utilisés sont généralement du silicate de sodium (US-A-2 057 414) ou des mélanges de silicate de sodium et d'autres composés comme l'oxyde ferreux (FR-A-941 035), l'oxyde de zinc (GB-A-521 214), ou l'aluminate de calcium (US-A-2 914 487).

Cependant, l'emploi de tels composés minéraux n'a pas permis d'obtenir des matériaux adsorbants présentant une grande porosité.

La présente invention a précisément pour objet un procédé de préparation d'un matériau adsorbant comprenant un support minéral dans lequel est incluse une substance adsorbante, qui permet l'obtention de matériaux de grande porosité ayant une teneur élevée en substance adsorbante et qui présente par ailleurs l'avantage d'être simple et d'un coût peu élevé, et de ne nécessiter que très peu d'opérations complémentaires pour transformer le matériau solide obtenu en une poudre de granulométrie voulue.

Le procédé selon l'invention de préparation d'un matériau adsorbant, se caractérise en ce qu'il consiste à préparer une solution aqueuse d'un silicate de métal alcalin et d'un composé choisi dans le groupe comprenant les hydroxydes de métaux alcalins et l'ammoniaque, à mélanger ladite solution avec une substance adsorbante sous la forme de poudre ou de gel, et à soumettre le mélange ainsi obtenu à un traitement thermique.

Grâce à l'emploi d'une solution aqueuse contenant un hydroxyde de métal alcalin ou de l'ammoniaque, on obtient par le procédé de l'invention un matériau de grande porosité. En effet, l'adjonction à la solution aqueuse de silicate de métal alcalin d'un hydroxyde de métal alcalin ou d'ammoniaque permet d'obtenir un pH nettement basique et ceci joue un rôle primordial en favorisant lors des phases ultérieures de chauffage et de dessication la formation d'une organisation cristalline de grande porosité.

Par ailleurs, le procédé de l'invention présente également l'avantage de nécessiter simplement un traitement thermique pour obtenir directement un support minéral dans lequel est incluse une substance adsorbante.

De plus, la réalisation de ce traitement thermique permet de ne pas modifier la nature et les propriétés des substances adsorbantes ajoutées à la solution.

Ainsi, ce procédé est d'une mise en oeuvre simple et d'un prix de revient peu élevé, ce qui le rend avantageux pour une utilisation à l'échelle industrielle.

De plus, le fait de partir d'une solution aqueuse à laquelle on ajoute la substance adsorbante permet d'obtenir des matériaux adsorbants présentant une teneur élevée en substance adsorbante, par exemple de 70 à 80% en poids de substance adsorbante, ce qui n'est pas le cas des procédés de l'art antérieur dans lesquels on fixe la substance adsorbante sur un support solide par imprégnation.

Selon une caractéristique avantageuse du procédé de l'invention, la solution aqueuse de départ est constituée par une solution d'un silicate de métal alcalin et de l'hydroxyde du même métal alcalin.

De préférence, on utilise de silicate et de l'hydroxyde de sodium.

Le choix de tels composés minéraux en vue de former le support présente l'avantage de conduire à l'obtention d'un matériau adsorbant présentant une bonne résistance mécanique et une bonne résistance aux acides.

Selon le procédé de l'invention, la substance adsorbante utilisée peut être acide, neutre ou basique.

A titre d'exemple de substances adsorbantes susceptibles d'être utilisiées, on peut citer à titre non limitatif les oxydes ou hydroxydes de fer, manganèse, titane, zirconium . . .

Avantageusement, la substance adsorbante est de l'hydroxyde de titane, de l'hydroxyde ferrique ou de l'oxyde de manganèse.

Lorsqu'on utilise de l'hydroxyde de titane, on l'ajoute de préférence à la solution aqueuse sous la forme d'un gel qui peut, par exemple, être obtenu par addition de soude à une solution d'oxalate de potassium titanyle suivie d'une floculation du précipité colloïdal ainsi obtenu.

Lorsqu'on utilise de l'hydroxyde ferrique, on l'ajoute sous forme de flocs obtenus par neutralisation d'une solution de chlorure ferrique.

Lorsqu'on utilise de l'oxyde de manganèse, on l'ajoute généralement à la solution sous forme de poudre de $MnO_2$.

Selon l'invention, on réalise de préférence le traitement thermique en au moins deux étapes réalisées à des températures différentes, au moins une première étape à une température inférieure à 100°C et une deuxième étape à une température de 100°C à 400°C.

Avantageusement, le traitement thermique est effectué en deux étapes réalisées à des températures différentes, la première étape étant réalisée à une température inférieure à 100°C pendant environ une journée, la deuxième étape étant réalisée à une température supérieure à 100°C et inférieure à 400°C pendant quelques heures pour obtenir un produit dont le poids reste constant.

Dans le cas d'une mise en œuvre du procédé de l'invention, pour la préparation d'un matériau absorbant à partir d'une solution aqueuse de silicate et d'hydroxyde de sodium à laquelle on ajoute un gel ou une poudre de substance adsorbante, on effectue avantageusement le traitement thermique en trois étapes, la première étape étant réalisée à environ 60°C pendant environ 20 h, la deuxième étape à environ 90°C pendant environ 6 h et la troisième étape à environ 180°C jusqu'à l'obtention d'un poids constant.

Après le traitement thermique, on obtient un matériau adsorbant poreux présentant une surface spécifique d'au moins 200 m²/g (méthode B.E.T. à chaud).

Selon l'invention, ou peut contrôler la surface spécifique du matériau adsorbant obtenu en réglant à une valeur appropriée la température à laquelle est effectuée la dernière étape du traitement thermique.

En effet, la surface spécifique du matériau adsorbant obtenu augmente avec la température de traitement utilisée.

On précise que les matériaux adsorbants ainsi obtenus peuvent être utilisés tels quels sous la forme de structure de percolation poreuse, ou être transformés en grains dont les dimensions sont ajustées en fonction de l'utilisation, par des opérations simples de broyage et de tamisage.

Généralement, lorsqu'on part d'une solution contenant un hydroxyde de métal alcalin, on soumet le matériau adsorbant obtenue à un lavage pour éliminer l'excès d'hydroxyde.

En revanche, lorsqu'on part d'une solution contenant de l'ammoniaque, il n'est pas nécessaire de réaliser un lavage car l'ammoniaque s'élimine par volatilisation.

L'invention a également pour objet un matériau adsorbant utilisable pour le traitement ou l'analyse de liquides contenant des matières organiques ou minérales.

Ce matériau se caractérise en ce qu'il présente une surface spécifique au moins égale à 200 m²/g et en ce qu'il comprend un support minéral constitué par le produit de la réaction d'un silicate de métal alcalin et d'un hydroxyde du même métal alcalin, et une substance adsorbante incluse dans ledit support.

De préférence, le métal alcalin est le sodium.

Avantageusement, la substance adsorbante est de l'hydroxyde de titane, de l'hydroxyde ferrique ou de l'oxyde de manganèse.

De préférence, le matériau adsorbant comprend de 70 à 80% en poids de substance adsorbante.

Les matériaux adsorbants selon l'invention peuvent être utilisés pour l'extraction de composés minéraux ou organiques lors du traitement d'effluents industriels, radioactifs ou non, ainsi que pour des mesures relatives à la pollution de l'environnement.

En particulier, de tels matériaux adsorbants contenant de l'hydroxyde de titane sont utilisables pour récupérer l'uranium à partir de solutions aqueuses telles que des eaux d'exhaure.

D'autres avantages et caractéristiques de l'invention apparaîtront mieux à la lecture des exemples suivants donnés bien entendu à titre illustratif et non limitatif.

### Exemple 1

Cet exemple concerne la préparation d'un matériau adsorbant constitué par un support minéral en silicate et hydroxyde de sodium dans lequel est inclus de l'hydroxyde de titane.

Tout d'abord, on prépare une solution de silicate et d'hydroxyde de sodium en mélangeant 38 ml d'une solution de silicate de sodium technique $SiO_3Na_2$ ayant une densité de 1,33 à 1,34 avec 13 ml d'une solution de soude ayant une densité de 1,32.

Par ailleurs, on prépare un gel d'hydroxyde de titane à partir d'une solution d'oxalate de potassium titanyle dans de l'eau distillée. On amène cette solution à pH 6,5—6,8 par addition de soude, puis on flocule le précipité colloïdal ainsi obtenu au moyen d'un floculant anionique commercialisé sous la marque Magnafloc pour faciliter sa filtration. Après floculation et filtration, on obtient un gel d'hydroxyde de titane dont la teneur en eau est d'environ 90%.

On ajoute alors la solution de silicate et d'hydroxyde de sodium à 500 g de ce gel d'hydroxyde de titane, et on mélange intimement l'ensemble qui est ensuite soumis à un traitement thermique effectué dans les conditions suivantes:

— une première étape effectuée à 60°C pendant 20 heures,
— une deuxième étape effectuée à 90°C pendant 6 heures, et
— une troisième étape effectuée à 180°C jusqu'à l'obtention d'un poids constant.

Le matériau adsorbant solide obtenu après traitement thermique présente une surface spécifique de 200 m²/g, une teneur en hydroxyde de titane de 73% et un volume poreux de 1030 mm³ · g⁻¹.

Ce matériau est transformé en grains par broyage et tamisage, à une granulométrie comprise entre 0,5 et 2 mm, en vue d'être utilisé pour l'extraction de l'uranium des eaux d'exhaure des mines de la façon suivante.

On place les grains dans une colonne, puis on les met sous la forme H⁺ en utilisant une solution d'acide chlorhydrique environ 2N, et on les rince ensuite avec de l'eau déminéralisée. On fait circuler ensuite la solution d'uranium dans la colonne, ce qui permet d'obtenir une capacité de fixation de l'ordre de 10 mg d'uranium par gramme de matériau adsorbant, dans les conditions opératoires suivantes:

— volume d'adsorbant: 66 ml,
— Diamètre de la colonne: 20 mm,
— Hauteur du lit: 210 mm,
— Vitesse de fixation et d'élution: 450 ml/h, soit 6,8 v/v/h,
— Eluant: HNO₃ ≃ 2N,
— Taux d'élution: 95% avec 4,5 v/v.

Si dans cet exemple de préparation du matériau adsorbant, on remplace la soude par l'ammoniaque, on obtient un matériau adsorbant présentant les mêmes caractéristiques.

### Exemple 2

Cet exemple concerne la préparation de matériau adsorbant contenant comme substance adsorbante de l'hydroxyde ferrique Fe(OH)₃.

On prépare, comme dans l'exemple 1, une solution de silicate et d'hydroxyde de sodium en utilisant les mêmes quantités de produits.

Par ailleurs, on prépare un gel d'hydroxyde ferrique Fe(OH)₃ par neutralisation à pH 7 d'une solution de chlorure ferrique.

On ajoute alors la solution de silicate et d'hydroxyde de sodium à 500 g de ce gel d'hydroxyde ferrique et on mélange intimement l'ensemble qui est ensuite soumis à un traitement thermique effectué dans les mêmes conditions que celles de l'exemple 1.

Le matériau adsorbant solide obtenu après ce traitement thermique présente une surface spécifique de 214 m²/g.

A titre comparatif, un matériau du commerce contenant également comme substance adsorbante de l'hydroxyde ferrique Fe(OH)₃ présente seulement une surface spécifique de 158 m²/g.

Ainsi, le procédé de l'invention permet d'obtenir une amélioration importante de la porosité du matériau obtenu.

### Exemple 3

Cet exemple se rapporte à la préparation d'un matériau adsorbant contenant du MnO₂ comme substance adsorbante.

On prépare une solution de silicate et d'hydroxyde de sodium en mélangeant 40 ml d'une solution de silicate de sodium technique SiO₃Na₂ ayant une densité de 1,33 à 1,34 avec 20 ml d'une solution de NaOH à 32%.

On ajoute à la solution de silicate et d'hydroxyde de sodium 13 g de poudre de bioxyde de manganèse MnO₂ et on mélange intimement l'ensemble qui est ensuite soumis à un traitement thermique effectué dans les mêmes conditions que celles de l'exemple 1.

Le matériau adsorbant solide obtenu après ce traitement thermique présente une surface spécifique de 201 m²/g.

A titre de comparaison, on précise que le produit du commerce vendu actuellement, qui contient également du bioxyde de manganèse, présente une surface spécifique de 124 m²/g.

### Exemple 4

Cet exemple concerne a préparation d'un matériau adsorbant constitué par un support en silicate de sodium dans lequel est inclus de l'hydroxyde de titane.

Dans ce cas, on prépare le matériau adsorbant en ajoutant 500 g de gel d'hydroxyde de titane préparé de la même façon que dans l'exemple 1 à 38 ml d'une solution de silicate de sodium technique SiO₃Na₂ ayant une densité de 1,33 à 1,34, et on mélange intimement l'ensemble que est ensuite soumis à traitement thermique effectué dans les mêmes conditions que celles de l'exemple 1.

Le matériau adsorbant ainsi obtenu présente une surface spécifique de 165 ± 5 m²/g.

En comparant ce résultat avec celui de l'exemple 1 où l'on part d'une solution de silicate et d'hydroxyde de sodium, on constante que l'addition de soude à la solution de départ permet d'obtenir une amélioration importante de la surface spécifique du matériau adsorbant obtenu.

### Exemple 5

Cet exemple illustre l'influence de la température utilisée dans la dernière étape du traitement thermique sur la surface spécifique du matériau adsorbant obtenu.

On prépare de la même façon que dans l'exemple 1 un mélange de solution de silicate et d'hydroxyde de sodium et de gel d'hydroxyde de titane puis on soumet ce mélange à un traitement thermique effectué dans les mêmes conditions que celles de l'exemple 1 pour les deux premières étapes, et on effectue la troisième étape soit à une température de 100°C, soit à une température de 440°C, jusqu'à l'obtention d'un poids constant.

Le matériau adsorbant solide obtenu après ce traitement thermique présente une surface spécifique de 135 m²/g lorsque la dernière étape est réalisée à 100°C et une surface spécifique de 180 m²/g lorsque la dernière étape est réalisée à 440°C.

En comparant ces résultats avec ceux obtenus dans l'exemple 1, on remarque que la surface specifique du matériau obtenu augmente avec la température utilisée pour la dernière étape du traitement thermique, mais que si l'on effectue ce traitement thermique à une température supérieure à 400°C l'effet à tendance à s'inverser.

## Revendications

1. Procédé de préparation d'un matériau adsorbant, caractérisé en ce qu'il consiste à préparer une solution aqueuse d'un silicate de métal alcalin et d'un composé choisi dans le groupe comprenant les hydroxydes de métaux alcalins et l'ammoniaque, à mélanger ladite solution avec une substance adsorbante sous la forme de poudre ou de gel, et à soumettre le mélange ainsi obtenu à un traitement thermique.

2. Procédé selon la revendication 1, caractérisé en ce que la solution aqueuse est une solution de silicate et d'hydroxyde du même métal alicalin.

3. Procédé selon la revendication 2, caractérisé en ce que le métal alcalin est le sodium.

4. Procédé selon l'une quelconque des revendications 1 à 3, caractérisé en ce que la substance adsorbante est sous la forme d'un gel.

5. Procédé selon l'une quelconque des revendications 1 à 4, caractérisé en ce que le traitement thermique est effectué en au moins deux étapes réalisées à des températures différentes, au moins une première étape réalisée à une température inférieure à 100°C et une deuxième étape réalisée à une température de 100°C à 400°C.

6. Procédé selon l'une quelconque des revendication 1 à 4, caractérisé en ce que le traitement thermique est effectué en deux étapes réalisées à des températures différentes, la première étape étant réalisée à une température inférieure à 100°C pendant environ une journée, la deuxième étape étant réalisée à une température supérieure à 100°C et inférieure à 400°C pendant quelques heures pour obtenir un produit dont le poids reste constant.

7. Procédé selon l'une quelconque des revendications 1 à 6, caractérisé en ce que l'on contrôle la surface spécifique du matériau adsorbant obtenu en réglant à une valeur appropriée la température à laquelle est effectuée la dernière étape du traitement thermique.

8. Matériau adsorbant utilisable pour le traitement ou l'analyse de liquides, caractérisé en ce qu'il présente une surface spécifique au moins égale à 200 m²/g et en ce qu'il comprend un support minéral constitué par le produit de la réaction d'un silicate de métal alcalin et d'un hydroxyde du même métal alcalin, et une substance adsorbante incluse dans ledit support.

9. Matériau adsorbant selon la revendication 8, caractérisé en ce que le métal alcalin est le sodium.

10. Matériau selon l'une quelconque des revendications 8 et 9, caractérisé en ce qu'il comprend de 70 à 80% en poids de substance adsorbante.

## Patentansprüche

1. Verfahren zum Herstellen eines Adsorptionsmaterials, dadurch gekennzeichnet, daß eine wäßrige Lösung aus einem Alkalimetallsilikat und einer Verbindung, die aus der Alkalimetallhydroxide und Amoniak umfassenden Gruppe gewählt ist, bereitet wird, daß diese Lösung mit einem adsorbierenden, pulverförmigen oder gelförmigen Stoff vermischt wird und daß die derart erhaltene Mischung einer Wärmebehandlung ausgesetzt wird.

2. Verfahren nach Anspruch 1, dadurch gekennzeichnet, daß die wäßrige Lösung eine Lösung aus Silikat und Hydroxid desselben Alkalimetalls ist.

3. Verfahren nach Anspruch 2, dadurch gekennzeichnet, daß das Alkalimetall Natrium ist.

4. Verfahren nach irgendeinem der Ansprüche 1 bis 3, dadurch gekennzeichnet, daß der adsorbierende Stoff in der Form eines Gels vorliegt.

5. Verfahren nach irgendeinem der Ansprüche 1 bis 4, dadurch gekennzeichnet, daß die Wärmebehandlung in wenigstens 2 Stufen bei unterschiedlichen Temperaturen durchgeführt wird, wobei wenigstens eine erste Stufe bei einer Temperatur unter 100°C und eine zweite Stufe bei einer Temperatur von 100°C bis 400°C durchgeführt wird.

6. Verfahren nach irgendeinem der Ansprüche 1 bis 4, dadurch gekennzeichnet, daß die Wärmebehandlung in zwei Stufen bei unterschiedlichen Temperaturen durchgeführt wird, wobei die erste Stufe bei einer Temperatur unter 100°C während ungefähr eines Tages und die zweite Stufe bei einer Temperatur über 100°C und unter 400°C während einiger Stunden durchgeführt wird, um ein Erzeugnis zu erhalten, dessen Gewicht konstant bleibt.

7. Verfahren nach irgendeinem der Ansprüche 1 bis 6, dadurch gekennzeichnet, daß die spezifische Oberfläche des erhaltenen, adsorbierenden Materials dadurch gesteuert wird, daß die Temperatur, bei der die letzte Stufe der Wärmebehandlung durchgeführt wird, auf einen geeigneten Wert eingestellt wird.

8. Adsorptionsmaterial, welches zur Behandlung oder Analyse von Flüssigkeiten verwendbar ist, dadurch gekennzeichnet, daß es eine spezifische Oberfläche von wenigstens gleich 200 m²/g aufweist und daß es ein Trägermineral umfaßt, welches durch das Reaktionsprodukt eines Alkalimetallsilikates und eines Hydroxyls desselben Alkalimetalls gebildet ist und daß ein adsorbierender Stoff in diesen Träger eingeschlossen ist.

9. Adsorptionsmaterial nach Anspruch 8, dadurch gekennzeichnet, daß das Alkalimetall Natrium ist.

10. Material nach Anspruch 8 oder 9, dadurch gekennzeichnet, daß es 70 bis 80 Gew.-% adsorbierenden Stoffes enthält.

**Claims**

1. Process for the preparation of an adsorbent material, characterized in that it comprises preparing an aqueous solution of an alkali metal silicate and a compound selected from the group comprising alkali metal and ammonium hydroxides, mixing said solution with an adsorbent substance in the form of a powder or gel, and subjecting the thus-obtained mixture to heat treatment.

2. Process according to Claim 1 characterized in that the aqueous solution is a solution of the silicate and the hydroxide of the same alkali metal.

3. Process according to Claim 2 characterized in that the alkali metal is sodium.

4. Process according to any one of Claims 1 to 3 characterized in that the adsorbent substance is in the form of a gel.

5. Process according to any one of Claims 1 to 4 characterized in that the heat treatment is carried out in at least two stages, conducted at different temperatures, at least one first stage being conducted at a temperature below 10° C, and a second stage being conducted at a temperature from 100° C to 400° C.

6. Process according to any one of Claims 1 to 4 characterized in that the heat treatment is carried out in two stages, conducted at different temperatures, the first stage being conducted at a temperature below 100° C for about one day, the second stage being conducted at a temperature above 100° C and below 400° C for several hours to produce a product of constant weight.

7. Process according to any one of Claims 1 to 6 characterized in that the specific surface of the obtained adsorbent material is controlled by regulating to an appropriate value the temperature at which the last stage of the heat treatment is conducted.

8. Adsorbent material for use in the treatment or analysis of liquids, characterized in that it has a specific surface of at least 200 m²/g and in that it comprises a mineral support provided by the reaction product of an alkali metal silicate and the hydroxide of the same alkali metal, and an adsorbent substance included in said support.

9. Adsorbent material according to Claim 8 characterized in that the alkali metal is sodium.

10. Material according to either of Claims 8 and 9, characterized in that it comprises 70 to 80% by weight of the adsorbent substance.